# EUROPEAN PATENT APPLICATION

(11) **EP 2 778 200 A1**
(43) Date of publication of application: **17.09.2014**
(21) Application number: 13159287.5
(22) Date of filing: 14.03.2013
(51) Int. Cl.: C08L 95/00, B32B 5/16, B32B 11/00, B61D 17/18, B62D 33/06, B60R 13/08, C08J 9/06, C08K 3/34, C08K 5/23

(54) **Sound damping composition**

(71) Applicant: Autoneum Management AG, 8406 Winterthur (CH)
(72) Inventor: Stopin, Gilles, 60430 Silly Tillard (FR)

(57) **Abstract**

A sound damping material composition for use as a bake-on free layer cladding in automotive applications, in particularly to dampen acoustic vibrations coming from 3D shaped metal body panels of vehicles, based on flaky mica filled bitumen.

## Description

### Technical Field

The present invention is directed to a sound damping material composition for use as a bake-on free layer cladding in automotive applications, in particularly to dampen acoustic vibrations coming from 3D shaped metal body panels of vehicles, based on inorganic-flake filled bitumen

### Background Art

Sound damping compositions, particularly in the form of pads, are used to dampen vibrational noise in a vehicle, particularly against engine related noise. The heat fusible pads may be applied to various metal components of the car such as door and floor panels, which are then given a heat treatment which fuses the pad onto the metal.

Sound damping or deadening compositions used for automotive applications as bake on damping material, are generally made of a bitumen or resin matrix, fillers and some process additives. A typical composition for a sound deadening panel is:
- Bitumen 25-30% by mass
- Polymer 0-5% by mass
- Fibre 3-5% by mass
- and filler 60-70% by mass. ( MORGAN, et al. The Shell Bitumen Industrial Handbook. Thomas Telford, 1995. ISBN 0951662511. )

Since in viscoelastic materials the Young modulus decreases with temperature, and the loss factor has a peak in function of temperature, there is a temperature window where the damping effect on a metal plate (called the composite damping) has a peak. Dampers are designed to have this peak fitting to the application temperature. Free layer dampers used in vehicles to dampen for instance the vibration of the metal body plates, have an optimal temperature profile to fit the area of use. For instance the hotter areas of a vehicle, like the outer dash, tunnel areas or the area of the trunk above the exhaust, need an optimal temperature profile in the range of 60-80°C. Other less heated areas need a temperature profile optimal in the range between 10-40°C.

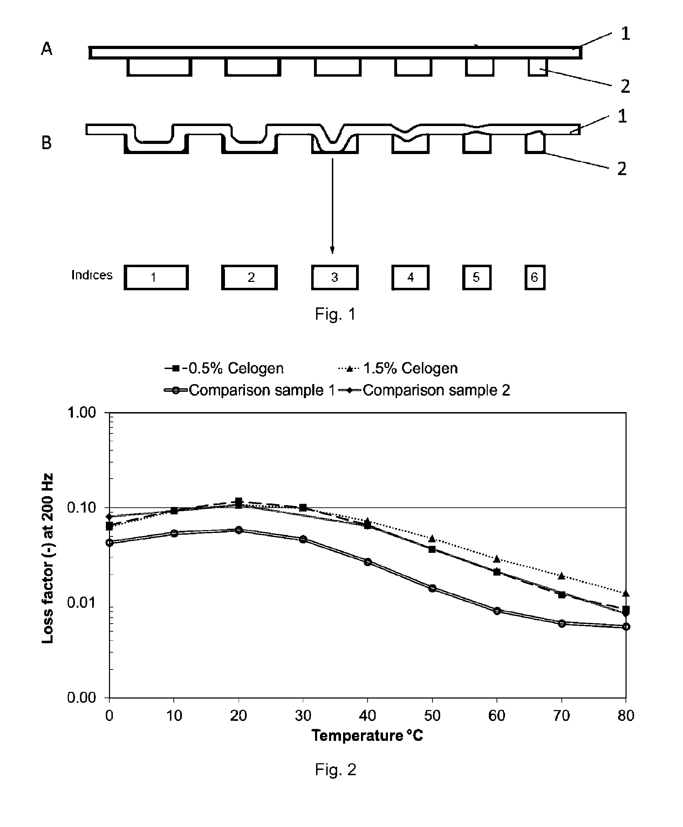

For a good damping performance it is important that the damping material follows and adheres to the underlying surface to be dampened. This is tested in the automotive industry using a conformability test (see figure 1), whereby the ability to conform to the underlying surface during curing is tested with a predefined surface.

Inorganic filler materials in particular mineral fillers are widely used for automotive damping sheets, in particularly finely grounded powder-like materials like limestone, slate or calcium carbonate are used. The structure of these material fillers is rounded fine granules. Also the use of fibrous or flake-like inorganic fillers are known and used in vibrational damping material. The reason to use these filler materials is for increasing the stiffness of the material, to enhance the overall properties in particular the damping loss factor of the material. Flaky inorganic fillers like mica flakes is recognised as a preferred material for acoustic damping material as it is believed that the flaky shape of the Mica enhances the vibrational damping properties. Although an increase amount of such flaky fillers will enhance the damping properties, at higher concentrations the material might become too stiff to handle and is prone to cracking or breaking easily. Furthermore the material will lack conformability at highly 3D shaped areas during the bake-on or curing process. Therefore the actual concentration used today is lower than wanted for a good damping performance.

For areas with a high degree of 3D shaping, for instance because of integrated ribs in the vehicle body panel, the filler content is decreased to enhance the conformability to a satisfying level, however at the cost of the overall damping performance. The dampers currently on the market available are therefore a compromise, however not a satisfactory one

In highly embossed or curved areas only up to 15-20% of a flaky filler can be used to meet conformability requirements. Higher amounts are only feasible on flat areas of a car body. Alternatively non flaky fillers are used to obtain the conformability, however with reduced damping properties.

### Summary of invention

It is the object of the current invention to obtain a viscoelastic material that can be used as a bake-on free layer damping, that eliminates the disadvantages of the state of the art material currently available, in particularly it is the objection to obtain a damping material with increase damping properties able to conform to 3D shaped surfaces during the bake-on curing process.

Surprisingly it was found that the material composition as claimed in main claim 1 using only a small amount of relaxation agent together with a high amount of mica filler would produce a free layer damper that satisfies the conformability test normally used in the automotive industry and that has increased damping properties.

The free layer damping material for damping of vehicle surfaces, according to the invention comprises:
- bitumen between 40 and 60% by mass;
- As a sole filler: a flaky inorganic filler in a concentration of between 40 and 52% by mass, preferable between 45 and 50% by mass;
- And a relaxation agent is used.

A relaxation agent is defined as an agent that relaxes the material during curing enough to obtain a good conformability without a decrease in density of the composite material during curing of more than 60% of the original composite density before curing, preferably without air gaps related to foaming action during curing in the material.

It was found that agents normally used as foaming agents for expandable constrained layer damping material used in low quantities would relax the material enough to enable shape conformity during the curing process. Furthermore using a low amount of the relaxation agent would prevent an excessive foaming and therefore the damping properties are kept on a preferable level.

Surprisingly it was found that endothermic agents even work better than exothermic agents. To date only exothermic foaming agents are known and normally used to make expandable bitumen dampers for constrained layer damping. It was found that endothermic foaming agents due to the lower foaming capabilities are a better relaxation agent, giving rise to less decrease in density during curing, therefore keeping a higher Young's modulus and therefore higher damping properties.

Due to the relaxation agent the material would adapt during curing to the underlying shape, thereby optimising the damping performance. As there is only minimal expansion of the damping material the initial viscoelastic properties of the highly filled material is hardly changed, enabling an increased concentration of mica and therefore a better damping performance in shaped or curved areas of a vehicle.

### The relaxation agent

As a relaxation agent both endothermic or exothermic chemical foaming agents can be used. As the curing temperature of a vehicle body-in-white is around 150-200°C, preferably the reaction temperature of the chemical foaming agent is in this range.

As there is no need for the actual foaming action, on the contrary foaming as such is not preferred the range can be reached without the need for additional reaction agents to optimised the foaming reaction. In particularly the use of enhancing agents enhancing the foam production for instance in the form of more gas production would not be preferred, as this would deteriorate the overall free damping properties.

Exothermic chemical foaming agents release energy during decomposition and are widely used for expandable constrained layer dampers. Once decomposition has started, it continuous spontaneously after the energy supply has been stopped. Exothermic chemical foaming agents include hydrazine's and azo compounds. Examples of such exothermic foaming agents that can be used in view of the current invention are Azodicarbonimide (H²N-CO-N=N-CO-NH²) for instance Porofor (Lanxess) or Benzene Sulfonylhydrazide (C₂H₁₄N₄O₅S₂), for instance Celogen OT (Galata Chemicals).

Exothermic agents tend to have a higher foaming action, a lower concentration in the amount of between 0.5 - 2% by mass is preferred. Levels at 3% by mass and over had a negative effect on the conformability, as the damping material tended to become less cohesive and too fluid, this enhances the risk that during the curing process on the vehicle the material might flow.

Endothermic chemical foaming agents are agents that consume energy during decomposition, requiring continuous energy input during the full reaction time. They are mostly based on bicarbonate and citric acid. Although they are known foaming agents for the plastics industry, the endothermic foaming agents are hardly used in the bitumen damping industry. An example of a chemical foaming agent that can be used in view of the current invention as a relaxation agent is Calciumhydrogencarbonat for instance Hydrocerol (Clariant). It was found that a concentration of between 0.3 and 3% by mass gave a good result in conformability. Already 0.5% would result in a satisfying conformability and at the same time the foaming would be minimal, showing a very good damping performance. Although the % used is also dependent on the % of filler, as a general rule it can be said that concentrations of relaxation agent closer to 0.3 would be more preferred and in most cases sufficient to obtain the conformability without unnecessary decreasing the damping properties.

The preferred amount of relaxation agent is the minimal amount needed for the damping material to conform to the underlying 3D shape of the metal flooring without cracking during curing. Using more than is necessary for this step would decrease the damping properties and would be disadvantageous. Using the foaming agent in the range normally indicated for proper foaming or expansion of the damping material for a constrained layer damper would lead to a considerable increase of the layer and a decrease of the necessary stiffness under the values needed for a good free layer damping performance. Furthermore the risk of flowing during curing bake on of the composition will increase.

Surprisingly a very small amount of such relaxation agents can be used to relax the material during curing enough to let it conform to the shape and at the same time enable the use of a higher concentration of flaky inorganic fillers. Due this the damping properties for a good free layer damping conforming to 3D shaped areas are kept or even enhanced. At low concentrations the chemical foaming agents seems to work as a relaxation agent without creating normal foam bubbles in the bitumen. It was found that if they are used in a concentration of less than 3% in combination with the high levels of flaky inorganic filler as claimed, the material would form no cracks during curing.

### The filler

As the sole filler a flaky inorganic filler is used like for instance mica flakes or graphite flakes. Preferably mica is used as graphite is more heavy and black colouring.

Part from the form also the particle size has an influence on the overall damping performance of the free layer damper. A rough flaky mica with a particle distribution having at least 60% of the particles between 200 and 850u is preferred. So Mica flakes between 16 and 24 mesh size, preferably with 20 Mesh might be used.

The % of mica in the overall damping material has a big influence on the damping properties of the material in use. An increase in mica has an advantageous effect on the stiffness and Young's modulus, however at the same is a disadvantage for the extension at break and the tensile strength. Due to the use of the relaxation agent for our free layer damper more mica can be incorporated in the damping material without negative effect like cracking, or a too brittle product. At the same time the overall damping properties are enhanced by using these higher amounts. The amount of mica preferably used is between 40 and 52% by mass, preferable between 45 and 50% by mass.

### Bitumen

The damper can be made of soft bitumen pen from between 15 up till 50 pen, preferably a 20/30 pen grade is used.

Optionally binder additives can be used, for instance polymers like rubber or synthetic rubber and/or fibres, preferably to a total of 5% by mass.

### Definitions and measurements

All % are given as % by mass based on the final recipe of the material being 100%.

Conformability test was done using the 3D shape as given in figure 1 following the normal procedures for curing the material according to specification by Renault known by the person skilled in the art.

The loss factor was measured with a Carrousel system (Autoneum Management) based on DIN EN ISO 6721-3.

### Description of embodiments

These and other characteristics of the invention will be clear from the following description of preferential forms, given as non-restrictive examples with reference to the attached figures.

Figure 1 Schematic representation of a conformability test

Figure 2 Graph with damping properties of damping material according to the invention and a comparable state of the art material.

Figure 3 Graph with damping properties of damping material according to the invention and a comparable state of the art material.

Figure 4 Graph with change of density for the recipes according to the invention dependent on the concentration of relaxation agent.

Figure 1 shows schematically how the measurement for the conformability of the damping material after curing (bake-on) is assessed. The damping material (1) is placed on a 3D shaped piece of metal (2) with ribs with the width of the ribs becoming smaller (A). After curing (B) it is assessed how much the material would sink into the spaces underneath. Material that is able to sink in the ribs with Indices with 2 and 3, but not in the higher indices ribs will pass test for conformability. Material that is able to sink also in ribs with higher indices for instance 5 and 6 is deemed to be too fluid and when applied on a car might pose problems of flowing during the curing/bake-on process.

Figure 2, 3 and 4 show a comparison of 2 different state of the art bake-on free layer damping material with a satisfying conformability - comparison sample 1 and comparison sample 2, with either damping material according to the invention with an endothermic or an exothermic relaxation agent. For the loss factor only those products which passed the conformability test are shown.

Comparison sample 1 is made of 25% by mass Bitumen, 72% by mass Chalk and 3% by mass other process related additives. No relaxation agent was added and chalk is the sole filler. This state of the art damper material is typically used for areas in a vehicle that need a high conformability due to a complex 3D shape of the underlying surface of car on which it is applied, normally this can be distinctive ribs or sharply curved areas. This sample has an area weight of 2.0 kg/m².

Comparison sample 2 is made of 27% by mass Bitumen, a combination of 58% by mass chalk and 10% by mass of mica and 5% by mass of other process related additives. The area weight is around 2.7 kg/m², this sample is heavier than all other samples and examples.

The examples with relaxation agent were based on the same basic recipe with 43.5 % by mass of Bitumen 20/30 pen grade and around 4.5% by mass of other process related additives. Between 48 and 50.5% by mass of mica flakes were used as filler depending on the amount of relaxation agent used. The recipe amounting to total of 100% by mass. The area weight of all samples were around 2 kg/m².

As relaxation agent either the endothermic agent Hydrocerol BIH or the exothermic agent Celogen OT was used. Comparison of 0%, 0.5%, 1.5% or 3% by mass of relaxation agent were made and the conformability, the damping loss factor as well as the density decrease were analysed.

For the Celogen samples it was found that the conformability of only the samples with 0.5 and 1.5 were acceptable. Figure 2 is showing the loss factor of the Celogen samples in comparison to the state of the art samples. Both Celogen samples are outperforming the state of the art samples in the normal temperature area of 10 to 40°C as well as in the area of 60-80°C.

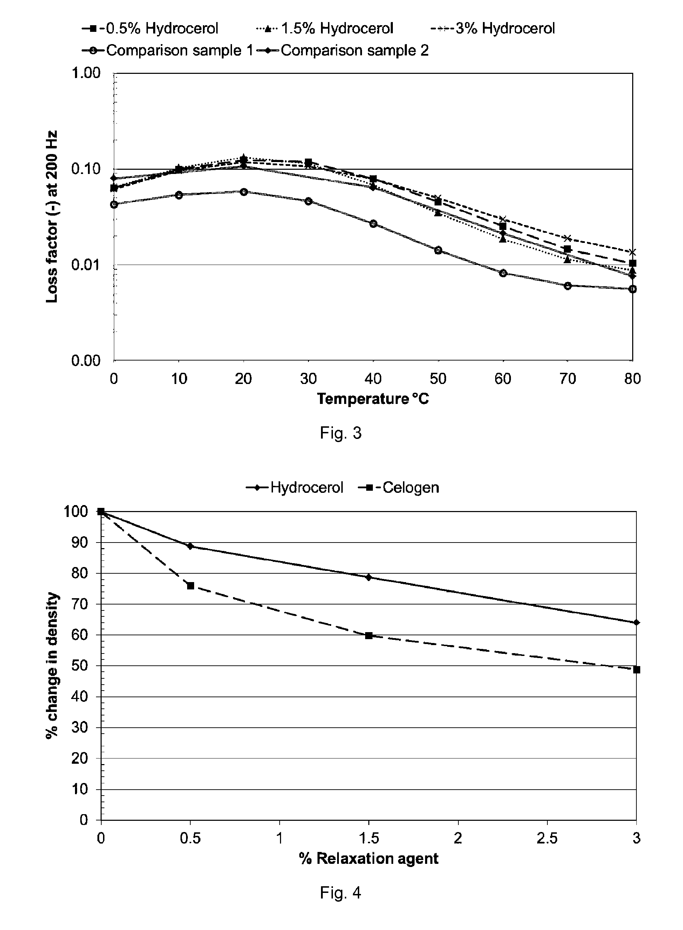

The Hydrocerol samples (Figure 3) show an overall better performance. All samples with Hydrocerol, including the 3% Hydrocerol concentration, showed satisfying conformability as well as good damping properties in the normal and hot temperature areas. The 3% Hydrocerol sample was comparable with the comparison sample 2, although it has a much lower density.

Figure 4 shows the change in density for the samples in relation to the % relaxation agent used for the Celogen and the Hydrocerol samples. Clearly visible is the fact that the Celogen is a much better foaming agent and therefore the decrease in density is much higher. The 3% Celogen shows already a decrease in density of 60%, however this sample did not perform anymore in the conformability test.

As an decrease in density is an indication for the stiffness of the damping material and therefore the damping properties when used as a free layer damper, a decrease in density of not more than 50% is preferred.

Interestingly microscopic pictures of the material cross sections showed that in particularly using this low level concentrations of in particularly endothermic foaming agent did not form any bubble type of gaps in the material, showing that the agent more worked as a relaxation agent for the matrix around the mica flakes than as an actual foaming agent forming any type of pores in the material. Only with the highest concentration of endothermic agent a view bubble type of pores could be seen in the microscope. However the samples with the exothermic agent already showed bubbles on the surface of the lowest concentration.

As the endothermic agent is working slower and can be more controlled, this would be the preferred solution the function as a relaxation agent.

## Claims

1. Composite material for bake-on free layer damping of automotive panels able to conform to 3D shaped surfaces comprising of bitumen, filler and additives, **characterised in that** the bitumen is between 40 and 60% by mass, at least 40% by mass of a flaky inorganic filler is used as the sole filler material, and a relaxation agent is used between 0.5 and 2.5%.

2. Composite material according to claim 1, whereby the relaxation agent is an endothermic or exothermic foaming agent.

3. Composite material according to claim 2, whereby the exothermic foaming agent is used in the range of between 0.3-2.0%.

4. Composite material according to claim 2 or 3, whereby the exothermic foaming agent is one chosen from the group of azo- or hydrazide compounds, preferably Azodicarbonimide or Sylfonylhydrazide.

5. Composite material according to claim 2 whereby the endothermic foaming agent is used in the range of between 0.3-3%.

6. Composite material according to claim 2 or 5 whereby the endothermic foaming agent is one of the group of bicarbonate, preferably Calciumhydrogencarbonate.

7. Composite material according to one of the previous claims whereby the inorganic flaky filler is either mica flakes or Graphite flakes.

8. Composite material according to one of the previous claims whereby the inorganic flaky filler is flakes with a mesh size between 16 and 24 Mesh preferably 20 Mesh.

9. Composite according to one of the previous claims whereby the inorganic flaky filler is between 40-52% by mass, preferably between 45-50% by mass.

10. Composite material according to one of the previous claims, whereby the material further comprises up to 5% by mass of binder material, chosen from the group of polymers, for instance rubber or synthetic rubber and/or fibres.

11. Composite material according to one of the previous claims whereby the composite material further comprises up to 3% of process related additives, for instance one of the group of technical oils.
